# EUROPÄISCHE PATENTSCHRIFT

(11) **EP 2 801 467 B1**
(45) Veröffentlichungstag und Bekanntmachung des Hinweises auf die Patenterteilung: **10.10.2018**
(21) Anmeldenummer: 13167100.0
(22) Anmeldetag: 08.05.2013
(51) Int. Cl.: B29C 47/90, B29C 47/88, B29C 47/34, B29C 47/92, B29C 55/28, B29C 47/20

(54) **Kalibriervorrichtung zum Kalibrieren eines extrudierten Folienschlauchs**
Calibration device for calibrating an extruded tubular film
Dispositif d'étalonnage pour l'étalonnage d'un tuyau de film extrudé

(43) Veröffentlichungstag der Anmeldung: 12.11.2014
(73) Patentinhaber: Kdesign GmbH, 53639 Königswinter (DE)
(72) Erfinder: Zimmermann, Richard, 53127 Bonn (DE); Fähling, Gerd, 53783 Eitorf (DE)
(74) Vertreter: Müller, Thomas Michael

(56) Entgegenhaltungen:
- DE-A1- 2 003 289
- DE-A1- 2 259 732
- DE-A1- 3 333 397
- DE-A1-102005 048 217
- DE-A1-102005 051 874
- DE-A1-102007 058 405
- DE-T2- 69 500 781
- DE-U1- 9 214 651
- US-A- 3 810 725

## Beschreibung

Die Erfindung betrifft eine Kalibriervorrichtung zum Kalibrieren eines extrudierten Folienschlauchs nach dem Oberbegriff des Anspruchs 1.

Eine solche Kalibriervorrichtung ist aus der DE 10 2005 051 874 A1 bekannt. Die Führungsflächen bestehen aus durchlöchertem oder porösem, bevorzugt gesintertem Material, wobei durch Beaufschlagung mit Druckluft ein Luftpolster zwischen den Führungsflächen und der Folie entsteht. Die Flächen weisen Löcher bzw. Öffnungen des porösen Materials auf, die senkrecht zur Oberfläche des Folienschlauchs ausgerichtet sind und diese senkrecht anblasen.

Weitere berührungslos arbeitende Kalibriervorrichtungen, bei denen anstelle der Laufrollen feste, nicht rotierfähige Führungskörper als Kalibriermittel vorgesehen sind, aus denen ein Luftschleier aus einer mikroporösen Oberfläche in Richtung der Folienblase ausgeblasen wird, um einen Folienkontakt zu verhindern, sind zum Beispiel in EP 1 488 910 B1 und WO 2005/084919 A1 eingehend beschrieben.

Diese Konstruktionen sind extrem verschmutzungsanfällig, da sich die poröse Oberfläche leicht durch im Extrusionsprozess aus dem Schmelzefilm ausgasende ölige Monomere in Verbindung mit Staub aus der Umgebungsluft zusetzt. Auch ist die absolute Berührungsfreiheit nicht immer gewährleistet, da der rechtwinklig gegen den Folienschlauch gerichtete Geschwindigkeitsvektor des diffus austretenden Luftschleiers klein ist und als Gegenkraft nicht immer ausreicht, wenn der Folienschlauch bei Anlagen mit hoher Leistung durch die Geschwindigkeit der in der Schlauchbildungszone angeblasenen Kühlluft in hochfrequente Bewegungen versetzt wird.

Zur Vermeidung dieser Nachteile schlägt EP 0 143 154 A1 eine Kalibriervorrichtung vor, die ein ringförmiges Stützelement aufweist, welches den Folienschlauch von außen umschließt. Das Stützelement ist mit nach innen offenen Ringkanälen versehen, die Anschlüsse zum Zuführen von Kühlluft aufweisen. Die Ringkanäle sind durch Flanken begrenzt, wobei in die Ringkanäle eine derartige Luftmenge eingeblasen wird, dass die über die seitlichen Flanken abströmende Luft ein den abgezogenen Folienschlauch abstützendes Luftpolster bildet. Dadurch wird sichergestellt, dass der Folienschlauch nicht mit dem Stützelement in Berührung kommt.

Bekannt sind auch berührende Kalibriervorrichtungen mit Rollenarmen als Kalibriermittel, die über verschiedenartige Verstellvorrichtungen dem Durchmesser der Folienblase angepasst werden. Bei älteren Bauformen, wie beispielsweise in der DE 26 38 744 A1 beschrieben, bestehen die die Folie kontaktierenden Kalibriermittel aus gebogenen Stangen, auf denen eine Vielzahl kleiner Ringe angeordnet ist, welche durch den Folienkontakt in Rotation versetzt werden. Diese Bauform ist extrem verschmutzungsanfällig und hinterlässt je nach Grad der Verschmutzung an den Trennstellen der Teflonringe Markierungen und sogar Oberflächenbeschädigungen auf der Folie.

Bei neueren verbesserten Bauformen wird die vorgenannte Ausführung der Kalibriermittel durch gerade, kugelgelagerte Laufrollen ersetzt. Beispielsweise ist aus der DE 20 2005 006 532 U1 bekannt, mehrere Rollen mit etwa horizontaler Achse und im Wesentlichen zum runden Folienschlauch tangentialer Anordnung vorzusehen, wobei die Rollen umfangsverteilt in mehreren übereinander liegenden Ebenen angeordnet sind. Die Rollen bilden in Aufsicht einen Polygonquerschnitt, welcher eine Durchführöffnung für den Folienschlauch bildet. Die Rollen sind radial verstellbar, so dass der Durchmesser der Durchführöffnung an den Durchmesser des Folienschlauchs angepasst werden kann. Die Rollen sind in Kontakt mit dem Folienschlauch und zur Vermeidung von Markierungen auf dem Folienschlauch um die horizontalen Achsen drehbar angeordnet. Für die Rollenoberflächen werden Materialien verwendet, die ein Anhaften des Folienschlauchs an den Rollen vermeiden, wie beispielsweise Teflon, Nylon, Silikon oder dergleichen. Sofern eine strukturierte Rollenoberfläche gewünscht ist, kommen auch Schaumstoff, Filz oder dergleichen zum Einsatz.

Der Folienschlauch wird aus einem thermoplastischen Kunststoff extrudiert und dampft wachsartige Bestandteile (Monomere) aus, die sich an den Rollen der Kalibriervorrichtung absetzen können. Somit kann es zu einem erhöhten Widerstand beim Rotieren der Rollen kommen. Ferner verschmutzen auch die Ummantelungen nach einiger Zeit und hinterlassen Markierungen, sofern keine regelmäßige Reinigung oder Austausch der Rollenmäntel erfolgt.

DE 36 37 941 A1 zeigt eine Vorrichtung zum Nachkühlen und kalibrierenden Führen eines Folienschlauchs oberhalb der Frostgrenze des Folienschlauchs. Diese umfasst einen den Folienschlauch umgebenden und nicht berührenden Schlauchring, der auf seiner gegen den Folienschlauch gerichteten Innenseite Blasbohrungen aufweist, die auf den Folienschlauch gerichtet sind. Der Schlauchring kann hierbei in Umfangsrichtung betrachtet aus einzelnen Bogenabschnitten bestehen und aus einem Material gefertigt sein, das ein Deformieren und damit ein Anpassen des Schlauchrings an unterschiedliche Durchmesser des Folienschlauchs ermöglicht.

Eine weitere Kalibriervorrichtung offenbart EP 0 273 739 A1. Die Kalibriervorrichtung umfasst einen Kalibrierring, der den Folienschlauch vollständig umgibt, oder mehrere Kalibriersegmente, die über einen Teil des Umfangs des Folienschlauchs verlaufen. Diese weisen jeweils zwei nach innen gerichtete schlitzförmige Öffnungen auf, wobei eine der schlitzförmigen Öffnungen in Abzugsrichtung des Folienschlauchs und eine der schlitzförmigen Öffnungen entgegen der Abzugsrichtung des Folienschlauchs ausgerichtet ist. Die beiden schlitzförmigen Öffnungen sind zudem voneinander weg gerichtet, so dass sich zwischen den beiden Öffnungen eine Zone geringen Drucks bzw. eine Zone eines partiellen Vakuums entsteht. Diese Zone geringen Drucks dient dazu, den Folienschlauch an das Kalibriersegment anzuziehen, wobei die durch die schlitzförmigen Öffnungen austretenden Luftströme jeweils ein Luftpolster bilden, durch welches verhindert wird, dass der Folienschlauch das Kalibriersegment berührt. Zudem ist die Oberfläche des Kalibriersegments im Bereich der Zone geringen Drucks gegenüber den übrigen dem Folienschlauch zugewandten Oberflächen des Kalibriersegments zurückversetzt, so dass auch hierdurch sichergestellt wird, dass der Folienschlauch das Kalibriersegment nicht berührt.

Nachteilig bei den bekannten Ausführungsformen ist, dass die Luft entweder in einer Richtung quer zur Oberfläche des Folienschlauchs an diesen herangeführt wird, wodurch eine unmittelbare Kraft auf den Folienschlauch ausgeübt wird, welche zu einer Deformation oder auch zu einer Instabilität des Folienschlauchs führen kann. Oder es sind, wie gemäß EP 0 273 739 A1, Zonen geringen Drucks vorhanden, die erfahrungsgemäß zu einer pulsierenden Bewegung des Folienschlauchs führen können, was wiederum die Stabilität der Führung des Folienschlauchs beeinträchtigt.

Aufgabe der vorliegenden Erfindung ist es, eine Kalibriervorrichtung vorzuschlagen, die eine stabile Führung des extrudierten Folienschlauchs gewährleistet.

Die Aufgabe wird durch eine Kalibriervorrichtung gemäß Anspruch 1 gelöst. Bevorzugte Ausführungsformen ergeben sich aus den abhängigen Ansprüchen.

Von Vorteil ist hierbei insbesondere, dass die Ausblasdüsen derart gestaltet sind, dass das Kalibriergas zumindest annähernd parallel zu einer Oberfläche des Folienschlauchs dem Ringspalt zugeführt wird. Somit ergibt sich keine direkte Kraftkomponente des Kalibriergasstroms auf den Folienschlauch. Bei der berührungslosen Kalibriervorrichtung nach vorliegender Erfindung wird der Venturi- bzw. Bernoulli-Effekt genutzt, durch den eine mit ausreichender Geschwindigkeit tangential entlang einer dem Folienschlauch zugewandten Fläche des Kalibriersegments geführte Kalibriergasströmung eine ansaugende und fixierende Kraft auf ein ausreichend nah befindliches bewegliches Element, in diesem Fall der Folienschlauch ausübt, ohne dass es zu einem berührenden Kontakt zwischen dem Folienschlauch und einem der Kalibriersegmente kommt. Der Folienschlauch nimmt durch diese Kraft in Verbindung mit dem Kalibriergaspolster als Gegenkraft eine stabile Abstandsposition zum Kalibriersegment ein.

Ferner verhindert die Gestaltung der Ausblasdüsen derart, dass der Ringspalt in einer einzigen Durchströmrichtung vom Kalibriergas durchströmt wird, dass sich eine zentrale Zone geringen Drucks bzw. eines partiellen Vakuums ausbildet, deren Druck vom Druck innerhalb des Stroms des Kalibriergases abweicht, so dass eine Instabilität des Folienschlauchs oder eine pulsierende Bewegung des Folienschlauchs vermieden wird.

Die Durchströmung des Ringspalts in genau einer Durchströmrichtung hat zudem den Vorteil, dass mehrere übereinander angeordnete Kalibriersegmente sich nicht beeinflussen, da die gesamte Durchströmrichtung aller Kalibriersegmente und damit der gesamten Kalibriervorrichtung identisch ist.

Um das Einsaugen von Umgebungsluft möglichst effizient zu gewährleisten, ist vorgesehen, dass die Ausblasdüsen außerhalb der Durchtrittsöffnung angeordnet sind. Dies bedeutet, dass das Kalibriergas zumindest teilweise außerhalb der Durchführöffnung strömt und somit Umgebungsluft mitreißen kann.

Hierzu ist vorgesehen sein, dass die zumindest eine Ausblasdüse je Kalibriersegment das Kalibriergas entlang einer Konturfläche, die in eine Führungsfläche innerhalb der Durchführöffnung übergeht, ausbläst. Im Bereich der Konturfläche kann somit Umgebungsluft mitgerissen werden.

Hierbei sind die Kalibriersegmente derart gestaltet, dass das aus den Ausblasöffnungen ausgeblasene Kalibriergas dem Verlauf der Konturfläche folgt. Die Konturfläche ist Teil einer Außenfläche des jeweiligen Kalibriersegments sein. Die Konturfläche ist vorzugsweise zumindest zum Teil zum Umlenken des Stroms des Kalibriergases gebogen, vorzugsweise konvex, ausgebildet. Der gebogene Teil der Konturfläche weist hierbei vorzugsweise einen Radius von mindestens 4 mm, vorzugsweise von 4 mm bis 10 mm, auf.

Hierbei wird der sogenannte Coander-Effekt zu Nutze gemacht, wonach ein Fluid die Tendenz hat, an einer konvexen Oberfläche entlangzulaufen, ohne sich von der Oberfläche abzulösen und sich in der ursprünglichen Strömungsrichtung weiter zu bewegen. Maßgeblich hierbei ist, dass ein Strahl der konvexen Fläche folgt und an dieser entlangströmt, so dass der Strahl des Fluids sich innerhalb z.B. der Umgebungsluft, welche sich in Ruhe befindet, bewegt. Dies hat zur Folge, dass sich der Strahl des Fluids nicht von der konvexen Oberfläche ablöst, wie dies bei einer normalen Strömung geschehen würde, bei der die gesamte Umgebungsluft an der konvexen Fläche entlangströmt.

Die Kalibriersegmente sind in einer Aufsicht in Richtung der Längsachse um diese verteilt angeordnet. Sie können durchaus entlang der Längsachse voneinander beabstandet sein. In Aufsicht betrachtet ergibt sich die Durchführöffnung, durch welche der Folienschlauch durch die Kalibriervorrichtung hindurchgeführt wird.

Bei dem Kalibriergas handelt es sich vorzugsweise um Luft. Grundsätzlich können jedoch auch andere Gase bzw. Gaszusammensetzungen verwendet werden.

Vorzugsweise sind die Kalibriersegmente derart gestaltet, dass Umgebungsluft auf einer Einströmseite der Kalibriervorrichtung in den Ringspalt eingesaugt wird. Hierdurch findet eine Verstärkung des Luftstroms statt, d.h. es wird eine größere Menge Kalibriergas bzw. Luft durch den Ringspalt hindurchgeführt, als Kalibriergas dem Ringspalt zugeführt wird. Somit lässt sich Energie einsparen, da eine geringere Menge Kalibriergas bereitgestellt werden muss.

Um dies zu erreichen, ist eine gewisse Strömungsgeschwindigkeit des Kalibriergases erforderlich. Die Strömungsgeschwindigkeit kann dadurch erhöht werden, dass zumindest eine Ausblasdüse je Kalibriersegment schlitzförmig in Form eines Ausblasspalts gestaltet ist. Hierbei hat der Ausblasspalt vorzugsweise eine Spaltbreite von weniger als einem Millimeter. Besonders vorteilhaft hat sich herausgestellt, wenn der Ausblasspalt eine Spaltweite von unter 0,5 mm aufweist.

Um zu gewährleisten, dass das Kalibriergas nicht einem zu hohen Druck zur Verfügung gestellt werden muss, was ebenfalls die Energieeffizienz senken würde, ist vorzugsweise vorzusehen, dass der Ausblasspalt eine Spaltbreite von mehr als 0,2 mm aufweist.

Bei der erfindungsgemäßen Kalibriervorrichtung kann es von Vorteil sein, dass die Ausblasdüsen das Kalibriergas quer zur Längsachse, vorzugsweise rechtwinklig zur Längsachse, ausblasen.

Um eine ausreichende Geschwindigkeit des Kalibriergases nach Austritt aus den Ausblasdüsen zu gewährleisten, sind diese mit zumindest einer Druckquelle verbunden. Grundsätzlich kann es sich hierbei um eine Druckluftquelle handeln. Um jedoch eine kostengünstige Druckquelle verwenden zu können, wie z.B. ein Gebläse, und somit ein kostenintensives Bereitstellen von Druckluft zu vermeiden, kann vorgesehen sein, dass die Druckquelle das Kalibriergas mit einem Druck von unter 0,5 bar, vorzugsweise unter 0,2 bar, zur Verfügung stellt.

Die Kalibriersegmente sind vorzugsweise um die Längsachse bogenabschnittsförmig gestaltet. Grundsätzlich können die Kalibriersegmente jedoch auch gerade ausgebildet sein.

Ferner kann vorgesehen sein, dass Einstellmittel vorgesehen sind, durch die die Volumenströme und/oder die Temperatur der aus den Kalibriersegmenten austretenden Kalibriergasströme je Kalibriersegment separat gesteuert oder geregelt werden können.

Es können auch mehrere Kalibriersegmente übereinander angeordnet sein, wobei die übereinander angeordneten Kalibriersegmente auf unterschiedliche Durchmesser der Durchführöffnung einstellbar sind, so dass sich die Durchführöffnung entlang der Längsachse und entlang des Folienschlauchs z.B. in Abzugsrichtung des Folienschlauchs verjüngt, um Schrumpfungseffekte des Folienschlauchs während der Verfestigung berücksichtigen zu können.

Ein bevorzugtes Ausführungsbeispiel wird im Folgenden anhand der Figuren näher erläutert. Hierin zeigt:
- Figur 1: eine Seitenansicht einer Folienblasanlage;
- Figur 2: eine Aufsicht auf eine erfindungsgemäße Kalibriervorrichtung in zwei unterschiedlichen Stellungen der Kalibriersegmente, und
- Figur 3: einen Querschnitt durch eines der Kalibriersegmente der Kalibriervorrichtung gemäß Figur 2.

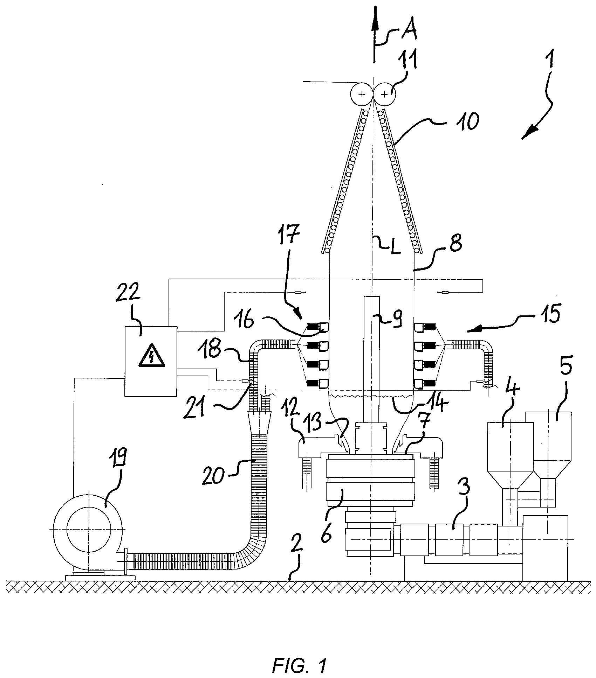

Figur 1 zeigt eine Seitenansicht einer Folienblasanlage 1. Auf einem Boden 2 steht ein Extruder 3, an dem zwei Aufgabetrichter 4, 5 für thermoplastisches Material zu erkennen sind. In Granulatform über die Aufgabetrichter 4, 5 aufgegebenes thermoplastisches Material wird durch Druck und zusätzliche Heizmittel in einer Schnecke des Extruders 3 plastifiziert und homogenisiert und in einen sich an den Extruder 3 anschließenden Blaskopf 6 mit vertikaler Achse gedrückt. Der Blaskopf 6 hat auf seiner Oberseite 7 eine hier nicht erkennbare Ringdüse, aus der ein sich erweiternder zu einer Längsachse L achssymmetrischer Folienschlauch 8 aus zunächst noch plastifiziertem thermoplastischem Kunststoff austritt. Der Folienschlauch 8 wird nach Austritt aus der Ringdüse mit Luft aufgeblasen, wozu ein Lufteinlass 9 dient, der innerhalb der Ringdüse angeordnet ist und sich innerhalb des Folienschlauchs 8 befindet. Somit wird der noch plastifizierbare Folienschlauch aufgeweitet. Nach Erstarrung des Kunststoffmaterials des Folienschlauchs 8 behält dieser seinen Durchmesser im wesentlichen bei. Der Folienschlauch 8 wird entlang der Längsachse L weiter nach oben in Abzugsrichtung A abgezogen und in einer Flachlegevorrichtung 10 flachgedrückt und über ein Abziehwerk 11 nach oben weggeführt. Der flachgedrückte Folienschlauch 8 wird anschließend auf Coils aufgewickelt.

Unmittelbar über dem Blaskopf 6 ist ein Kühlring 12 mit innen liegenden Austrittsdüsen 13 vorgesehen, aus denen Kühlgas ausströmt und den Folienschlauch 8, der unter erhöhtem Innendruck steht, ringförmig im wesentlichen bandparallel anströmt. Der in diesem Bereich plastifizierte Folienschlauch 8 erweitert sich zunächst im Durchmesser unter dem genannten Überdruck im Inneren, bis er unter der Wirkung des Kühlgases erstarrt und einen konstanten Durchmesser annimmt. Der Ort des Übergangs vom plastifizierten Kunststoffmaterial zum verfestigten Kunststoffmaterial wird Einfriergrenze genannt und ist mit dem Bezugszeichen 14 angegeben. Oberhalb, d.h. in Abzugsrichtung A stromab von der Einfriergrenze 14, befindet sich eine Kalibriervorrichtung 15, die mehrere Kalibriersegmente 16 umfasst, die um die Längsachse L und um den Umfang des Folienschlauchs 8 ringförmig angeordnet sind. Um eine Anpassung an Folienschläuche 8 unterschiedlicher Durchmesser zu ermöglichen, sind die Kalibriersegmente 16 in etwa radial zur Längsachse L verstellbar an einem Tragrahmen 17 befestigt. Bei der Kalibriervorrichtung 15 handelt es sich um eine berührungslose Kalibriervorrichtung 15, deren Bauteile nicht mit dem Folienschlauch 8 in Berührung gelangen. Hierzu ist jedes Kalibriersegment 16 über Kalibriergasleitungen 18 mit einem Gebläse 19 verbunden. Das Gebläse 19 bläst Luft in die Kalibriergasleitungen 18 zu den einzelnen Kalibriersegmenten 16, wobei die Kalibriersegmente 16 im späteren näher erläuterte Ausblasdüsen aufweisen, die die Luft oder ein anderes gasförmiges Medium in Richtung zum Folienschlauch 8 ausblasen. Die Kalibriergasleitungen 18, die zu den einzelnen Kalibriersegmenten 16 führen, werden von einer gemeinsamen Hauptleitung 20 gespeist. In den Kalibiergasleitungen 18 sind jeweils Strömungsklappen 21 angeordnet, um den Kalibriergasstrom innerhalb der einzelnen Kalibriergasleitungen 18 steuern zu können. Somit lässt sich über eine Steuerung 22 die Volumina der Kalibriergasströme und gegebenenfalls auch, über hier nicht dargestellte Heizelemente, die Temperatur der Kalibriergasströme zu den einzelnen Kalibriersegmenten 16 segmentweise steuern, so dass der Volumenstrom und/oder die Temperatur des Kalibriergases je Segment über den Umfang segmentweise variabel eingestellt werden kann.

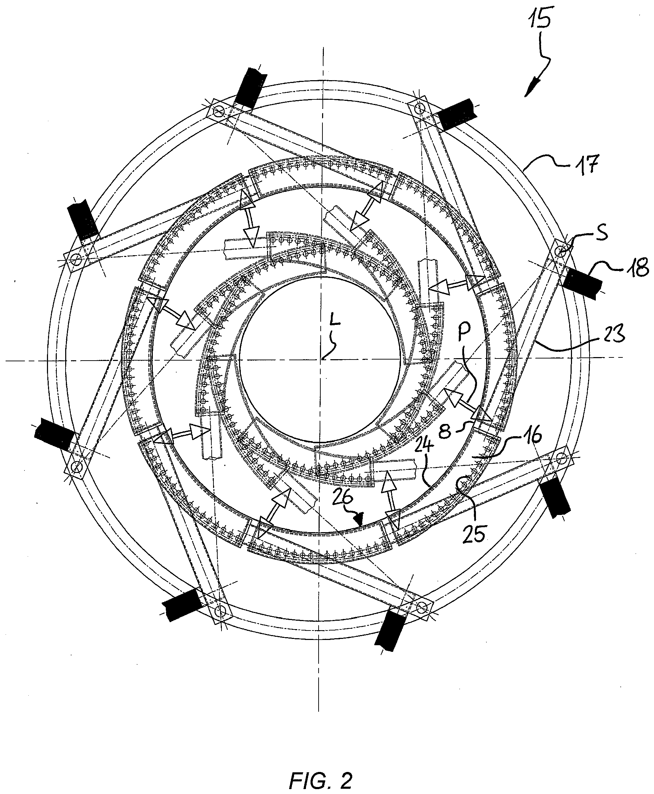

Figur 2 zeigt die Kalibriervorrichtung 15 in einer Aufsicht senkrecht zur Längsachse L. Insgesamt sind acht Kalibriersegmente 16 vorgesehen, die in zwei unterschiedlichen Stellungen dargestellt sind. Wie bereits oben erläutert, sind die Kalibriersegmente 16 in etwa radial relativ zur Längsachse L verstellbar. In Figur 2 sind die Kalibriersegmente 16 in einer radial äußeren Stellung und in einer radial inneren Stellung dargestellt.

Der Tragrahmen 17 ist in Ausrichtung betrachtet ringförmig gestaltet und um den Folienschlauch 8 angeordnet. An dem Tragrahmen 17 sind die Kalibriersegmente 16 schwenkbar befestigt, wobei im Folgenden eines der Kalibriersegmente 16 exemplarisch für alle weiteren Kalibriersegmente beschrieben wird.

Das Kalibriersegment 16 ist an einem seiner Enden mit einem Ende eines Arms 23 fest verbunden, wobei das vom Kalibriersegment 16 entfernte Ende des Arms 23 um eine Schwenkachse S schwenkbar am Tragrahmen 17 befestigt ist. Die Schwenkachse S verläuft parallel zur Längsachse L. Der Arm 23 ist rohrförmig gestaltet, um Kalibriergas führen zu können. An dem der Schwenkachse S zugewandten Ende ist der Arm 23 mit einer Kalibriergasleitung 18 leitungsmäßig verbunden, so dass Kalibrierluft von der Kalibriergasleitung 18 in den Arm 23 einströmen kann. An dem der Schwenkachse S abgewandten Seite ist der Arm 23 derart mit dem Kalibriersegment 16 verbunden, dass Kalibrierluft aus dem Arm 23 in das Kalibriersegment 16 eingeleitet werden kann. Das Kalibriersegment 16 ist ebenfalls rohrförmig gestaltet. In dem Kalibriersegment 16 sind Bohrungen 25 vorgesehen, durch welche die Kalibrierluft einer hier nicht dargestellten und später näher erläuterten Ausblasdüse zugeführt wird, welche für ein berührungsloses Führen und Kalibrieren des Folienschlauchs 8 genutzt wird.

Das Kalibriersegment 16 ist in Aufsicht gemäß Figur 2 bogenförmig gestaltet und weist eine nach innen weisende Führungsfläche 24 auf, welche dem größtmöglichen Durchmesser des Folienschlauchs 8 angepasst ist. Sämtliche Kalibriersegmente 16 sind um die Längsachse L verteilt angeordnet und schließen den Folienschlauch 8 zwischen sich ein. Zusammen bilden die einzelnen Ringsegmente16 einen Ring mit einer zentralen Durchführöffnung 26 zum Hindurchführen des Folienschlauchs 8.

Die Kalibriersegmente 16 können jeweils um die Schwenkachse S nach innen geschwenkt werden, so dass sich die Durchführöffnung 26 im Durchmesser irisförmig verkleinert, wie dies in der zweiten Stellung innen dargestellt ist. In der inneren Schwenkposition sind die Arme 23 samt Kalibriersegmenten 16 in Pfeilrichtung P nach innen geschwenkt, so dass ein Folienschlauch 8 mit einem geringeren Durchmesser kalibriert werden kann.

Grundsätzlich sind auch andere Verstellmöglichkeiten für die Kalibriersegmente 16 denkbar, wie Scherenmechanismen oder radial verlaufende Linearantriebe. Es ist auch grundsätzlich möglich, dass die Kalibriersegmente16 nicht bogenförmig sondern geradlinig ausgebildet sind.

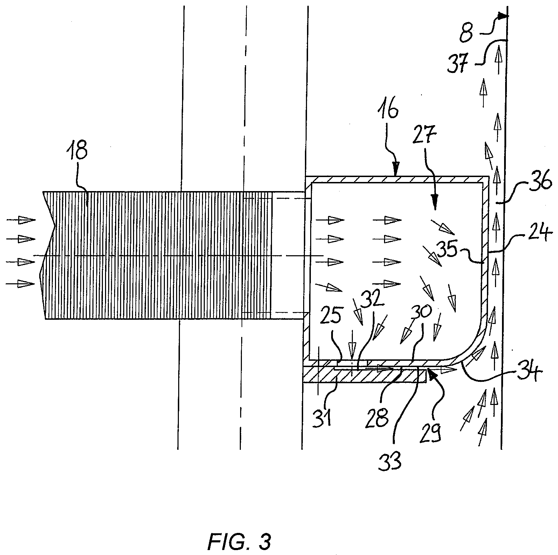

Figur 3 zeigt einen Querschnitt durch eines der Kalibriersegmente 16, wobei die Schnittebene parallel zur Längsachse L ausgerichtet ist. Das Kalibriersegment 16 ist in Form eines Hohlprofils gestaltet und bildet einen Kalibriergaskanal 27, der von der Kalibriergasleitung 18 mit Kalibriergas gespeist wird, wobei die Strömungsrichtungen des Kalibriergases durch die im Kalibriergaskanal 27 gezeigten Pfeile angedeutet sind. Aus dem Kalibriergaskanal 27 wird das Kalibriergas durch die Bohrungen 25 in einer ersten Seitenwand 30 des Kalibriersegments 16 einer schlitzförmigen Ausblasdüse 28 in Form eines Ausblasspalts zugeführt, wobei das Kalibriergas anschließend aus einer Austrittsöffnung 29 austritt. Die Ausblasdüse 28 erstreckt sich annähernd über die gesamte Länge des Kalibriersegments 16 über einen Teil des Umfangs des Folienschlauchs 8, wobei die Ausblasdüse 28 durch die Vielzahl der Bohrungen 25 mit Kalibriergas gespeist wird. Die Ausblasdüse 28 ist durch die erste Seitenwand 30 und eine Düsenplatte 31 gebildet, welche außen an der ersten Seitenwand 30 befestigt ist. Die erste Seitenwand 30 weist eine Außenfläche 33 auf, an der die Düsenplatte 31 befestigt ist, wobei die Düsenplatte 31 eine Innenfläche 32 aufweist, welche der Außenfläche 33 zugewandt ist und welche mit Abstand zu dieser angeordnet ist, so dass sich die Ausblasdüse 28 in Form eines Ausblasspalts bildet. Die Austrittsöffnung 29 ist dem Folienschlauch 8 zugewandt, wobei die Außenfläche 33 der ersten Seitenwand 30 senkrecht zur Längsachse L und somit quer zum Folienschlauch 8 angeordnet ist.

Die Außenfläche 33 weist innerhalb der Ausblasdüse 28 einen ebenen Verlauf auf und geht ab der Austrittsöffnung 29 in Richtung zum Folienschlauch 8 in eine Konturfläche 34 über, welche zum Teil einen gebogenen Verlauf aufweist. Der gebogene Verlauf der Konturfläche 34 geht in die nach innen weisende Führungsfläche 24 einer zweiten Seitenwand 35 über. Die Führungsfläche 24 ist in dem in Figur 3 gezeigtem Querschnitt parallel zu einer Oberfläche 37 des Folienschlauchs 8 ausgerichtet, so dass sich zwischen der Führungsfläche 24 und dem Folienschlauch 8 ein Spalt bildet, der bezogen auf alle Ringsegmente 16 über den gesamten Umfang einen Ringspalt 36 darstellt.

Das Kalibriergas wird somit durch die Bohrung 25 und die Ausblasdüse 28 umgelenkt und strömt innerhalb der Ausblasdüse 28 und auch noch kurz nach Austritt aus der Austrittsöffnung 29 quer zum Folienschlauch 8 und parallel zur Konturfläche 34 der ersten Seitenwand 30. Es bildet sich ein vorhangförmiger Kalibriergasstrahl sehr begrenzter Dicke, der parallel zur Außenfläche 33 strömt. Aufgrund des Coander-Effekts reißt dieser Kalibriergasstrom nicht von der Außenfläche 33 ab, sondern folgt der Konturfläche 34 und wird somit umgelenkt in eine Richtung parallel zum Folienschlauch 8 in den Ringspalt 36 hinein. Hierbei wird Umgebungsluft auf einer Einströmseite der Kalibriervorrichtung 15 von unterhalb der Kalibriersegmente 16 mitgerissen, so dass sich eine Luftverstärkung ergibt. Das im Endeffekt durch den Ringspalt 36 hindurchströmende Gasvolumen beträgt ein Vielfaches des aus der Austrittsöffnung 29 austretenden Volumens an Kalibriergas.

Aufgrund der hohen Strömungsgeschwindigkeit des Gases innerhalb des Ringspalts 36 ergibt sich ein Venturi-Effekt, der den Folienschlauch 8 an die Führungsfläche 24 anzieht, wobei der Folienschlauch 8 die Führungsfläche 24 nicht berührt, da das durchströmende Gas ein Luftpolster bildet. Somit kann der Folienschlauch 8 in einem konstanten Abstand zur Führungsfläche 24 gehalten werden und insgesamt geführt und kalibriert werden.

Der Coander-Effekt ist unter anderem auch von der Strömungsgeschwindigkeit und der Dicke des Strömungsstrahls bzw. des Strömungsvorhangs an Kalibriergas abhängig. Es hat sich gezeigt, dass gute Effekte zu erzielen sind, wenn innerhalb des Kalibriergaskanals 27 ein Druck von unter 0,5 bar, vorzugsweise von unter 0,2 bar, eingestellt wird. Besonders vorteilhaft ist dann eine Spaltweite der Ausblasdüse 28 von unter 1 mm, vorzugsweise unter 0,5 mm und vorzugsweise von über 0,2 mm. Der Radius des gebogenen Teils der Konturfläche 34 beträgt im Querschnitt mindestens 4 mm, vorzugsweise 4 mm bis 10 mm.

### Bezugszeichenliste

- 1: Folienblasanlage
- 2: Boden
- 3: Extruder
- 4: Aufgabetrichter
- 5: Aufgabetrichter
- 6: Blaskopf
- 7: Oberseite
- 8: Folienschlauch
- 9: Lufteinlass
- 10: Flachlegevorrichtung
- 11: Abziehwerk
- 12: Kühlring
- 13: Austrittsdüse
- 14: Einfriergrenze
- 15: Kalibriervorrichtung
- 16: Kalibriersegment
- 17: Tragrahmen
- 18: Kalibriergasleitung
- 19: Gebläse
- 20: Hauptleitung
- 21: Strömungsklappe
- 22: Steuerung
- 23: Arm
- 24: Führungsfläche
- 25: Bohrung
- 26: Durchführöffnung
- 27: Kalibriergaskanal
- 28: Ausblasdüse
- 29: Austrittsöffnung
- 30: erste Seitenwand
- 31: Düsenplatte
- 32: Innenfläche
- 33: Außenfläche
- 34: Konturfläche
- 35: zweite Seitenwand
- 36: Ringspalt
- 37: Oberfläche

- L: Längsachse
- A: Abzugsrichtung
- S: Schwenkachse
- P: Pfeil

## Patentansprüche

1. Kalibriervorrichtung (15) zum Kalibrieren eines extrudierten Folienschlauchs (8) oberhalb der Einfriergrenze (14), wobei zwischen Führungsflächen (24) der Kalibriervorrichtung (15) und Folienschlauch (8) ein Ringspalt (36) gebildet ist, umfassend
mehrere Kalibriersegmente (16), die um eine Längsachse (L) verteilt angeordnet sind und eine zentrale Durchführöffnung (26) zum Hindurchführen des Folienschlauchs (8) entlang der Führungsflächen (24) der Kalibriersegmente (16) und entlang der Längsachse (L) bilden, wobei die Kalibriersegmente (16) zum Einstellen des Durchmessers der Durchführöffnung (26) verstellbar sind, und
mindestens eine Ausblasdüse (28) je Kalibriersegment (16), durch die ein Kalibriergas der Durchführöffnung zugeführt wird,
**dadurch gekennzeichnet,**
**dass** die mindestens eine Ausblasdüse (28) je Kalibriersegment (16) außerhalb der Durchführöffnung (26) angeordnet ist,
**dass** eine Außenfläche (33) je Kalibriersegment (16) ab der mindestens einen Ausblasdüse (28) derart entlang einer gebogenen Konturfläche (34) in die Führungsfläche (24) übergeht, dass das Kalibriergas zumindest annähernd parallel zu einer Oberfläche des Folienschlauchs dem Ringspalt (36) zugeführt wird und der Ringspalt (36) in einer einzigen Durchströmrichtung vom Kalibriergas durchströmt wird, und
**dass** die Kalibriersegmente (16) derart gestaltet sind, dass das aus den Ausblasdüsen (28) ausgeblasene Kalibriergas dem Verlauf der Konturflächen (34) folgt.

2. Kalibriervorrichtung nach Anspruch 1,
**dadurch gekennzeichnet,**
**dass** die Kalibriersegmente (16) derart gestaltet sind, dass Umgebungsluft auf einer Einströmseite der Kalibriervorrichtung (15) in den Ringspalt gesaugt wird.

3. Kalibriervorrichtung nach einem der vorangehenden Ansprüche,
**dadurch gekennzeichnet,**
**dass** die zumindest eine Ausblasdüse (28) je Kalibriersegment (16) schlitzförmig in Form eines Ausblasspalts gestaltet ist.

4. Kalibriervorrichtung nach Anspruch 3,
**dadurch gekennzeichnet,**
**dass** der Ausblasspalt eine Spaltweite von kleiner 1 mm, vorzugsweise kleiner 0,5 mm, aufweist.

5. Kalibriervorrichtung nach einem der Ansprüche 3 oder 4,
**dadurch gekennzeichnet,**
**dass** der Ausblasspalt eine Spaltweite von größer 0,2 mm aufweist.

6. Kalibriervorrichtung nach einem der vorangehenden Ansprüche,
**dadurch gekennzeichnet,**
**dass** der gebogene Teil der Konturfläche (34) einen Radius von mindestens 4 mm aufweist.

7. Kalibriervorrichtung nach einem der vorangehenden Ansprüche,
**dadurch gekennzeichnet,**
**dass** die Ausblasdüsen (28) das Kalibriergas quer zur Längsachse (L), vorzugsweise rechtwinklig zur Längsachse (L), ausblasen.

8. Kalibriervorrichtung nach einem der vorangehenden Ansprüche,
**dadurch gekennzeichnet,**
**dass** die Ausblasdüsen (28) mit zumindest einer Druckquelle (19) verbunden sind, wobei die Druckquelle (19) das Kalibriergas mit einem Druck von unter 0,5 bar, vorzugsweise unter 0,2 bar, zur Verfügung stellt.

9. Kalibriervorrichtung nach einem der vorangehenden Ansprüche,
**dadurch gekennzeichnet,**
**dass** die Kalibriersegmente (16) um die Längsachse (L) bogenförmig gestaltet sind.

10. Kalibriervorrichtung nach einem der vorangehenden Ansprüche,
**dadurch gekennzeichnet,**
**dass** Einstellmittel (21) vorgesehen sind, durch die die Volumenströme und/oder die Temperatur des aus den Kalibriersegmenten (16) austretenden Kalibriergases je Kalibriersegment (16) separat gesteuert oder geregelt werden können.

11. Kalibriervorrichtung nach einem der vorangehenden Ansprüche,
**dadurch gekennzeichnet,**
**dass** mehrere Kalibriersegmente (16) übereinander angeordnet sind und dass die übereinander angeordneten Kalibriersegmente (16) auf unterschiedliche Durchmesser der Durchführöffnung (26) einstellbar sind.

## Claims

1. Calibration device (15) for calibrating an extruded film tube (8) above the frost line (14), wherein an annular gap (36) is formed between guide faces (24) of the calibration device (15) and the film tube (8), comprising
a plurality of calibration segments (16) distributed around a longitudinal axis (L) and forming a central feed through opening (26) for feeding through the film tube (8) along the guide faces (24) of the calibration segments (16) and along the longitudinal axis (L), wherein the calibration segments (16) are adjustable for adjusting the diameter of the feed through opening (26), and
at least one blowing nozzle (28) for each calibration segment (16), said at least one blowing nozzle (28) feeds a calibration gas to the feed through opening,
**characterised in**
**that** said at least one blowing nozzle (28) of each calibration segment (16) is arranged outside of the feed through opening (26), that the outer face (33) of each calibration segment (16) starting from said at least one blowing nozzle (28) merges such with the guide face (24) along an accurate outline face (34) that the calibration gas is supplied to the annular gap (36) at least substantially parallel to a surface of the film tube and flows in a single through-flow direction through the annular gap (36), and that the calibration segments (16) are formed such, that the calibration gas, expelled from the at least one blowing nozzle (28), follows the contour of the outline face (34).

2. Calibration device according to claim 1,
**characterised in**
**that** the calibration segments (16) are formed such, that ambient air is sucked into the annular gap on an inlet side of the calibration device (15).

3. Calibration device according to one of the preceding claims,
**characterised in**
**that** the at least one blowing nozzle (28) for each calibration segment (16) is formed slot-like in the form of an blowing gap.

4. Calibration device according to claim 3,
**characterised in**
**that** the blowing gap has a gap width of less than 1 mm, preferably less than 0.5 mm.

5. Calibration device according to one of claims 3 or 4,
**characterised in**
**that** the blowing gap has a gap width of larger than 0.2 mm.

6. Calibration device according to one of the preceding claims,
**characterised in**
**that** the curved part of the outline face (34) has a radius of at least 4 mm.

7. Calibration device according to one of the preceding claims,
**characterised in**
**that** the at least one blowing nozzle (28) expels the calibration gas transversally to the longitudinal axis (L), preferably at a right angle to the longitudinal axis (L).

8. Calibration device according to one of the preceding claims,
**characterised in**
**that** the at least one blowing nozzle (28) is connected at least to one pressure source (19), wherein the pressure source (19) provides the calibration gas with a pressure of less than 0.5 bar, preferably less than 0.2 bar.

9. Calibration device according to one of the preceding claims,
**characterised in**
**that** the calibration segments (16) are formed arcuate around the longitudinal axis (L).

10. Calibration device according to one of the preceding claims,
**characterised in**
**that** adjustment means (21) are provided, by means of which the volume flows and/or the temperature of the calibration gas, exiting from the calibration segments (16), can be separately controlled for each calibration segment.

11. Calibration device according to one of the preceding claims,
**characterised in**
**that** several calibration segments (16) are arranged above one another and that the calibration segments (16), which are arranged above each other, are adjustable to different diameters of the feed through opening (26).

## Revendications

1. Dispositif d'étalonnage (15) pour l'étalonnage d'un tuyau de film extrudé (8) au-delà d'une limite de congélation (14), dans lequel une fente annulaire (36) est formée entre des surfaces de guidage (24) du dispositif d'étalonnage (15) et le tuyau de film extrudé (8), comprenant
plusieurs segments d'étalonnage (16) qui sont disposés répartis sur un axe longitudinal (L) et forment une ouverture de passage (26) centrale pour faire passer au travers le tuyau de film (8) le long des surfaces de guidage (24) des segments d'étalonnage (16) et le long de l'axe longitudinal (L), dans lequel les segments d'étalonnage (16) sont mobiles pour régler le diamètre de l'ouverture de passage (26), et
au moins une buse de soufflage (28) par segment d'étalonnage (16) à travers laquelle un gaz d'étalonnage est dirigé vers l'ouverture de passage,
**caractérisé en ce que**
l'au moins une buse de soufflage (28) par segment d'étalonnage (16) est disposée hors de l'ouverture de passage (26),
qu'une face extérieure (33) par segment d'étalonnage (16) passe de l'au moins une buse de soufflage (28) à la surface de guidage (24) de telle façon le long d'une surface de contour (34) arquée que le gaz d'étalonnage est dirigé vers la fente annulaire (36) au moins presque parallèlement à une surface du tuyau de film, et la fente annulaire (36) est traversée par le gaz d'étalonnage dans un seul sens d'écoulement, et que les segments d'étalonnage (16) sont ainsi formés que le gaz d'étalonnage soufflé hors des buses de soufflage (28) suit le tracé des surfaces de contour (34) .

2. Dispositif d'étalonnage selon la revendication 1, **caractérisé en ce que** les segments d'étalonnage (16) sont ainsi formés que de l'air environnant sur un côté de flux entrant du dispositif d'étalonnage (15) est aspiré dans la fente annulaire.

3. Dispositif d'étalonnage selon l'une des revendications précédentes, **caractérisé en ce que** l'au moins une buse de soufflage (28) par segment d'étalonnage (16) est fendue, ayant la forme d'une fente de soufflage.

4. Dispositif d'étalonnage selon la revendication 3, **caractérisé en ce que** la fente de soufflage présente une largeur de soufflage inférieure à 1 mm, de préférence inférieure à 0,5 mm.

5. Dispositif d'étalonnage selon l'une des revendications 3 ou 4, **caractérisé en ce que** la fente de soufflage présente une largeur de fente supérieure à 0,2 mm.

6. Dispositif d'étalonnage selon l'une des revendications précédentes, **caractérisé en ce que** la partie arquée de la surface de contour (34) présente un rayon d'au moins 4 mm.

7. Dispositif d'étalonnage selon l'une des revendications précédentes, **caractérisé en ce que** les buses de soufflage (28) soufflent le gaz de soufflage transversalement à l'axe longitudinal (L), de préférence en angle droit par rapport à l'axe longitudinal (L).

8. Dispositif d'étalonnage selon l'une des revendications précédentes, **caractérisé en ce que** les buses de soufflage (28) sont reliées à au moins une source de pression (19), dans lequel la source de pression (19) fournit le gaz d'étalonnage à une pression inférieure à 0,5 bar, de préférence inférieure à 0,2 bar.

9. Dispositif d'étalonnage selon l'une des revendications précédentes, **caractérisé en ce que** les segments d'étalonnage (16) sont formés arqués sur l'axe longitudinal (L).

10. Dispositif d'étalonnage selon l'une des revendications précédentes, **caractérisé en ce que**
des moyens de réglage (21) sont prévus, par lesquels les débits volumiques et/ou la température du gaz d'étalonnage sortant des segments d'étalonnage (16) peuvent être pilotés ou régulés séparément par segment d'étalonnage (16).

11. Dispositif d'étalonnage selon l'une des revendications précédentes, **caractérisé en ce que**
plusieurs segments d'étalonnage (16) sont disposés l'un au-dessus de l'autre et que les segments d'étalonnage (16) disposés l'un au-dessus de l'autre sont réglables à différents diamètres de l'ouverture de passage (26).
